# EUROPÄISCHE PATENTANMELDUNG

(11) **EP 3 815 514 A1**
(43) Veröffentlichungstag der Anmeldung: **05.05.2021**
(21) Anmeldenummer: 19206694.2
(22) Anmeldetag: 01.11.2019
(51) Int. Cl.: A01G 13/02

(54) **MATTE SOWIE AUS DER MATTE GEBILDETE WUCHSHILFE UND/ODER SCHUTZ FÜR PFLANZEN IN FORM EINER HÜLLE**

(71) Anmelder: Eschlbeck, Franz, 83209 Prien am Chiemsee (DE)
(72) Erfinder: Eschlbeck, Franz, 83209 Prien am Chiemsee (DE)
(74) Vertreter: Nowack, Linda

(57) **Zusammenfassung**

Bereitgestellt wird eine Matte, insbesondere zur Verwendung als Wuchshilfe und/oder Schutz für Pflanzen, gebildet aus einer ersten Lage aus Innenlamellen, die gebildet ist aus mehreren, jeweils parallel und in einem Abstand zueinander angeordneten Innenlamellen, einer zweiten Lage aus Außenlamellen, die gebildet ist aus mehreren, jeweils parallel und in einem Abstand zueinander angeordneten Außenlamellen. Die zweite Lage aus Außenlamellen definiert die Breite der Matte von einem ersten Ende zu einem zweiten Ende der Matte. Die erste Lage aus Innenlamellen und die zweite Lage aus Außenlamellen sind miteinander derart verbunden, dass die Innenlamellen und die Außenlamellen in einem Winkel zueinander angeordnet sind. Die erste Lage aus Innenlamellen beginnt in einem ersten Abstand von dem ersten Ende der Matte, wobei die erste Innenlamelle als Haltelamelle dient. Ferner wird eine Wuchshilfe und/oder Schutzhülle bereitgestellt.

## Beschreibung

Die Erfindung betrifft eine Matte sowie eine aus der Matte gebildete Wuchshilfe und/oder Schutz für Pflanzen in Form einer Hülle. Diese ist besonders in der Anwendung in der Land- und Forstwirtschaft vorteilhaft.

Es sind bereits Wuchshilfen und Schutzhüllen für Pflanzen bekannt. Diese werden eingesetzt, um Pflanzen beim Wuchs zu unterstützen, bis sie eine Größe erreicht haben, bei der sie sich selbst tragen können. Zusätzlich dienen solche Hüllen auch als Schutz gegen Tiere, sei es, um ein unerwünschtes Abfressen junger Triebe zu verhindern, oder um die Pflanze vor einem Scheuern des Tieres an der Pflanze, z.B. mit seinem Körper oder Hörnern, zu verhindern. Das nötige Rückbauen der bekannten Wuchshilfen und Schutzhüllen ist allerdings arbeits- und kostenintensiv.

Zum Schutz der Umwelt sind auch bereits Wuchs- und Schutzhüllen bekannt, die aus biologisch abbaubarem Material gebildet sind. Die verwendeten Materialien hierfür sind Kunststoffe, in der Regel Polypropylene (PP), welche durch Mikroorganismen zersetzt werden können. Allerdings müssen diese Materialien aktiv unter Zufuhr von z.B. Enzymen abgebaut werden, d.h. nach einer gewissen Zeit entfernt und zu einem Ort gebracht werden, an dem sie abgebaut werden können, da sie aus gesetzlichen Gründen Abfall im Sinne des Kreislaufwirtschaftsgesetzes sind und deshalb aus dem Wald zu entfernen sind.

Dies ist im kleinen gewerblichen Rahmen und im privaten Bereich mit annehmbarem Zeitaufwand möglich. Aber da solche Wuchshilfen und Schutzhüllen im großen Stil in der Forstwirtschaft eingesetzt werden, ist es nötig, einfach aufzustellende Wuchshilfen und Schutzhüllen bereitzustellen. Besonders vorteilhaft sind diese Wuchshilfen und Schutzhüllen auch noch ohne Hilfsmittel biologisch abbaubar, so dass sie an der Pflanze bleiben und dort nach einer gewissen Zeit vollständig abgebaut werden.

Deshalb ist es eine Aufgabe dieser Erfindung, eine Matte sowie eine aus der Matte gebildete Wuchshilfe und/oder Schutzhülle in Form einer Hülle bereitzustellen, welche diese Kriterien erfüllen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird eine Matte, insbesondere zur Verwendung als Wuchshilfe und/oder Schutz für Pflanzen, gebildet aus einer ersten Lage aus Innenlamellen, die gebildet ist aus mehreren, jeweils parallel und in einem Abstand zueinander angeordneten Innenlamellen, einer zweiten Lage aus Außenlamellen, die gebildet ist aus mehreren, jeweils parallel und in einem Abstand zueinander angeordneten Außenlamellen. Die zweite Lage aus Außenlamellen definiert die Breite der Matte von einem ersten Ende zu einem zweiten Ende der Matte. Die erste Lage aus Innenlamellen und die zweite Lage aus Außenlamellen sind miteinander derart verbunden, dass die Innenlamellen und die Außenlamellen in einem Winkel zueinander angeordnet sind. Die erste Lage aus Innenlamellen beginnt in einem ersten Abstand von dem ersten Ende der Matte, wobei die erste Innenlamelle als Haltelamelle dient.

In einer ersten Ausführung endet die erste Lage aus Innenlamellen an dem zweiten Ende der Matte in einem zweiten Abstand zum zweiten Ende. In einer alternativen Ausführung endet die erste Lage aus Innenlamellen an dem zweiten Ende der Matte bündig damit. Die letzte Innenlamelle dient als erste horizontale Verriegelungslamelle.

An dem ersten Ende der Matte ist eine zweite horizontale Verriegelungslamelle an einer der ersten Lage aus Innenlamellen gegenüberliegenden Seite der zweiten Lage aus Außenlamellen derart angeordnet und mit der zweiten Lage aus Außenlamellen verbunden, dass sie zum ersten Ende der Matte bündig beginnt. Das heißt, dass sie mit ihrer ganzen Breite an den Außenlamellen befestigt ist und ihre äußerste Kante mit dem ersten Ende der Matte abschließt.

Des Weiteren ist im Falle der ersten Alternative, also wenn die erste horizontale Verriegelungslamelle im zweiten Abstand zum zweiten Ende der Matte endet, vorgesehen, dass die Innenlamellen, die Außenlamellen und die zweite horizontale Verriegelungslamelle dieselbe Lamellenbreite aufweisen, die Innenlamellen in einem dritten Abstand zueinander angeordnet sind, und die Außenlamellen ebenfalls im dritten Abstand zueinander angeordnet sind. Ferner weist die Haltelamelle einen vierten Abstand zu einer von dem ersten Ende weg weisenden Innenkante der zweiten horizontalen Verriegelungslamelle auf. Außerdem entspricht der erste Abstand dem vierten Abstand plus einer Lamellenbreite, wobei der vierte Abstand mindestens größer als die Lamellenbreite ist.

In dieser Ausführung stehen die Außenlamellen auf Seite des zweiten Endes der Matte darüber hinaus und bilden Haltefedern, die im Bereich des vierten Abstands hinter die Haltelamelle geschoben bzw. gesteckt werden, wenn die Matte in die Form einer Hülle gebracht wird.

Vorteilhaft ist vorgesehen, dass der vierte Abstand gleich oder kleiner dem zweiten Abstand ist, oder gleich dem zweifachen dritten Abstand plus einer Lamellenbreite. So wird eine selbsthemmende Verriegelung durch Einstecken von am zweiten Ende herausstehenden Außenlamellen hinter die Haltelamelle möglich, wenn die Matte in die Form einer Hülle gebracht wird.

Des Weiteren ist vorgesehen, dass die erste Lage aus Innenlamellen aus der Haltelamelle und der ersten horizontalen Verriegelungslamelle sowie einer dazwischen angeordneten durchgängigen Platte mit einer Plattenbreite gebildet ist, d.h. die Lage aus Innenlamellen ist lediglich aus drei Innenlamellen gebildet. Die Haltelamelle ist direkt an einem ersten Endbereich der Platte befestigt, der zum ersten Ende der Matte weist, d.h. es ist kein Abstand zwischen Haltelamelle und Platte. Die Haltelamelle kann so an der Platte befestigt sein, dass die daran nicht fixiert, sondern beweglich befestigt ist. Dies erleichtert das Einbringen der Haltefedern, also der über die letzte Innenlamelle bzw. erste horizontale Verriegelungslamelle hinausstehenden Außenlamellen. Ferner ist die erste horizontale Verriegelungslamelle in einem dritten Abstand zu einem zweiten Endbereich der Platte befestigt. Der zweite Endbereich liegt dem ersten Endbereich gegenüber, weist also zum zweiten Ende der Matte. Außerdem endet die erste horizontale Verriegelungslamelle in einem zweiten Abstand zum zweiten Ende. Ferner sind die Haltelamelle und die zweite horizontale Verriegelungslamelle im dritten Abstand zueinander angeordnet.

Des Weiteren ist vorgesehen, dass Endbereiche der zum zweiten Ende der Matte weisenden Außenlamellen mit einer Schutzfase versehen sind. Dies gilt für alle Ausführungen mit selbsthemmender Verriegelung, also Ausführungen, bei denen Haltefedern, d.h. über den Endbereich herausstehende Außenlamellen, vorgesehen sind.

Des Weiteren ist vorgesehen, dass der erste Abstand gleich oder größer dem zweiten Abstand ist. Durch entsprechende Wahl des Abstands wird das Einschieben bzw. Einstecken der Haltefedern ermöglicht und ein Herausrutschen verhindert.

Alternativ oder zusätzlich ist vorgesehen, dass der dritte Abstand größer als die Lamellenbreite ist. Somit kann die Matte gebogen werden und zumindest die zweite Verriegelungslamelle in einen Zwischenraum zwischen vorletzter und letzter Innenlamelle am zweiten Ende der Matte eingebracht werden, um die dann entstandene Hülle zu verriegeln.

Des Weiteren im Falle der ersten Alternative, also wenn die erste horizontale Verriegelungslamelle bündig zum zweiten Ende der Matte endet, vorgesehen, dass die Innenlamellen, die Außenlamellen und die zweite horizontale Verriegelungslamelle dieselbe Lamellenbreite aufweisen, und die Innenlamellen in einem dritten Abstand zueinander angeordnet sind, und die Außenlamellen im dritten Abstand zueinander angeordnet sind, und die Haltelamelle im dritten Abstand zu einer von dem ersten Ende weg weisenden Innenkante der zweiten horizontalen Verriegelungslamelle angeordnet ist, der kleiner als der erste Abstand ist, und wobei der dritte Abstand größer als die Lamellenbreite ist.

Des Weiteren im Falle der ersten Alternative, also wenn die erste horizontale Verriegelungslamelle bündig mit dem zweiten Ende der Matte endet, vorgesehen, dass die erste Lage aus Innenlamellen aus der Haltelamelle und der ersten horizontalen Verriegelungslamelle sowie einer dazwischen angeordneten durchgängigen Platte mit einer Plattenbreite gebildet ist, und die Haltelamelle direkt an einem ersten Endbereich der Platte befestigt ist, der zum ersten Ende der Matte weist, und die erste horizontale Verriegelungslamelle in einem dritten Abstand zu einem zweiten Endbereich der Platte befestigt ist. Die Haltelamelle und die zweite horizontale Verriegelungslamelle sind im dritten Abstand zueinander angeordnet. Auch hier liegt der zweite Endbereich dem ersten Endbereich gegenüber, weist also zum zweiten Ende der Matte. Auch hier ist der Abstand zwischen erster horizontaler Verriegelungslamelle und Haltelamelle durch die jeweiligen zueinander weisenden Kanten der beiden Lamellen definiert.

Des Weiteren ist vorgesehen, dass die Haltelamelle und die erste horizontale Verriegelungslamelle dieselbe Lamellenlänge wie die zweite horizontale Verriegelungslamelle aufweisen.

Des Weiteren ist vorgesehen, dass die Matte, genauer alle Komponenten der Matte, aus einem oder mehreren auf Holzzellulose basierendem Werkstoffen gebildet ist. Somit kann eine Matte bereitgestellt werden, die vollständig und ohne weitere Hilfsmittel am Ort des Benutzens verrottet.

Des Weiteren ist vorgesehen, dass der Winkel zwischen einschließlich 0 Grad und einschließlich 90 Grad ist, und bevorzugt 30 Grad ist. Des Weiteren ist vorgesehen, dass die Länge der Matte der Breite der Matte entspricht.

Vorgeschlagen wird ferner eine Wuchshilfe und/oder Schutz für Pflanzen, die aus einer beschriebenen Matte gebildet ist, wobei im Falle, dass die Lage aus Innenlamellen im zweiten Abstand vom zweiten Ende der Matte endet, das erste Ende und das zweite Ende der Matte vertikal und horizontal selbsthemmend derart miteinander in Eingriff gebracht sind, dass die zweite Verriegelungslamelle in die durch die vorletzte Innenlamelle auf Seite des zweiten Endes der Matte und die erste Verriegelungslamelle gebildete Verriegelungsnut eingebracht ist, und die Endbereiche der Außenlamellen in den Bereich zwischen Haltelamelle und erster horizontaler Verriegelungslamelle hinter die Haltelamelle geführt sind.

Des Weiteren ist vorgesehen, dass im Falle, dass die Lage aus Innenlamellen bündig mit dem zweiten Ende der Matte endet, mindestens ein Verschlusselement vorgesehen ist, und wobei das erste Ende und das zweite Ende der Matte derart miteinander in Eingriff gebracht sind, dass die zweite Verriegelungslamelle in die durch die vorletzte Innenlamelle auf Seite des zweiten Endes der Matte und die erste Verriegelungslamelle gebildete Verriegelungsnut eingebracht ist, und das erste Ende und das zweite Ende der Matte mittels mindestens einem der Verschlusselemente miteinander verbunden sind.

Des Weiteren ist vorgesehen, dass das Verschlusselement eines oder eine Kombination ist aus mindestens einer Halteklemme, welche die zweite Verriegelungslamelle und/oder die Haltelamelle mit der ersten Verriegelungslamelle verbindet, mindestens einem um die Wuchs- und/oder Schutzhülle umlaufenden Band, mindestens einem durch erste Verriegelungslamelle und zweite Verriegelungslamelle sowie den zugehörigen Bereich der Lage der Außenlamellen durchgeführten Befestigungselement, mindestens einem durch erste Verriegelungslamelle und zweite Verriegelungslamelle sowie den zugehörigen Bereich der Lage der Außenlamellen durchgeführten Befestigungselement, welche mittels einem Strick oder Draht miteinander verbunden sind.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Fig. 1 zeigt eine Innenansicht einer Matte 100 gemäß einer Ausführung der vorliegenden Erfindung.
Fig. 2 zeigt eine Außenansicht einer Matte 100 der in Figur 1 gezeigten Ausführung.
Fig. 3 zeigt eine aus der in Figur 1 gezeigten Matte 100 gebildete Wuchshilfe und/oder Schutzhülle.
Fig. 4 zeigt eine Ansicht einer Matte 100 gemäß einer alternativen Ausführung der vorliegenden Erfindung.
Fig. 5 zeigt eine Draufsicht auf eine aus der in Figur 4 gezeigten Matte 100 gebildeten Wuchshilfe und/oder Schutzhülle mit selbsthemmender Verriegelung gemäß einer Ausführung der Erfindung.
Fig. 6 zeigt eine aus der in Figur 4 gezeigten Matte 100 gebildete Wuchshilfe und/oder Schutzhülle.
Fig. 7 zeigt eine Ansicht einer Matte 100 gemäß einer weiteren alternativen Ausführung der vorliegenden Erfindung.
Figuren 8 und 11 zeigen jeweils eine Draufsicht auf eine aus der in Figur 7 gezeigten Matte 100 gebildeten Wuchshilfe und/oder Schutzhülle mit Verschlusselement gemäß unterschiedlichen Ausführung der Erfindung.
Figuren 9 und 10 zeigen jeweils eine Ansicht einer aus der in Figur 7 gezeigten Matte 100 gebildeten Wuchshilfe und/oder Schutzhülle mit Verschlusselement gemäß weiteren unterschiedlichen Ausführung der Erfindung.
Figuren 12 bis 15 zeigen Formen, die mit der Matte 100 gebildet werden können, gemäß unterschiedlichen Ausführungen der Erfindung.

In den nachfolgenden Figurenbeschreibungen sind gleiche Elemente bzw. Funktionen mit gleichen Bezugszeichen versehen.

Die vorgeschlagene Matte kann in unterschiedlichsten Bereichen eingesetzt werden, wird aber vorteilhaft in der Land- und Forstwirtschaft als Wuchshilfe und/oder Schutzhülle für Pflanzen verwendet, da sie aus vollständig ohne Hilfsmittel verrottbarem Material hergestellt werden kann.

Aus der vorgeschlagenen Matte 100 kann eine einfach aufzustellende Wuchshilfe und/oder Schutzhülle für Pflanzen bereitgestellt werden, die unter Bezugnahme auf die Figuren nachfolgend im Detail beschrieben wird. Aus dieser Matte 100 kann im einfachsten Fall durch Biegen der Matte 100 eine Hülle erzeugt werden, welche eine Pflanze umhüllt und damit als Wuchshilfe und/oder Schutz vor Tieren dient.

Das grundsätzliche Prinzip der Konstruktion der Matte 100 wird nachfolgend beschrieben. Dieses ist für alle gezeigten Ausführungen und Figuren dasselbe.

Die Matte 100 ist mehrlagig gebildet, wobei sie eine erste Lage aus Innenlamellen 1 aufweist, die aus mehreren, jeweils parallel und in einem Abstand zueinander angeordneten Innenlamellen 1 gebildet ist. Ferner weist sie eine zweite Lage aus Außenlamellen 2 auf, die aus mehreren, jeweils parallel und in einem Abstand zueinander angeordneten Außenlamellen 2 gebildet ist.

Die zweite Lage aus Außenlamellen 2 definiert die Breite B der Matte 100 von einem ersten Ende 101 zu einem zweiten Ende 102 der Matte 100.

Die erste Lage aus Innenlamellen 1 und die zweite Lage aus Außenlamellen 2 sind miteinander derart verbunden, dass die Innenlamellen 1 und die Außenlamellen 2 in einem Winkel W zueinander angeordnet sind. Der Winkel W ist dabei je nach Ausführung zwischen jeweils einschließlich 0 Grad und 90 Grad, wobei er in einer bevorzugten Ausführung 30 Grad ist.

Die erste Lage aus Innenlamellen 1 beginnt mit einer ersten Außenseite 110 einer ersten Innenlamelle 1, 10 ferner in einem ersten Abstand A1 von dem ersten Ende 101 der Matte 100, wobei die erste Innenlamelle 1 als Haltelamelle 10 dient.

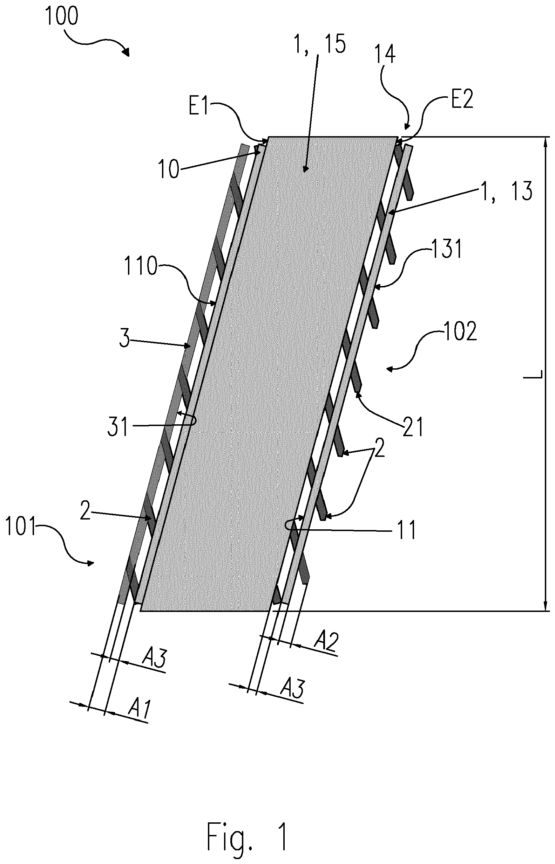

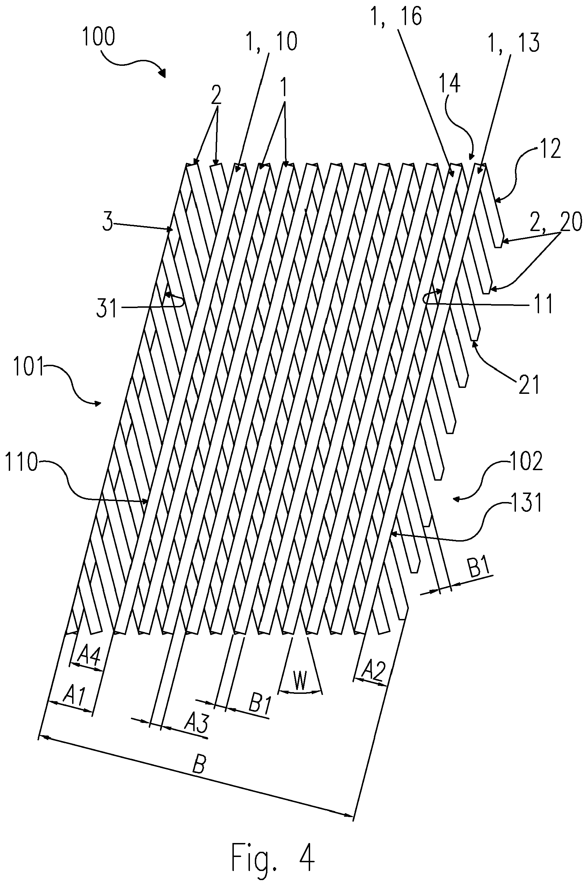

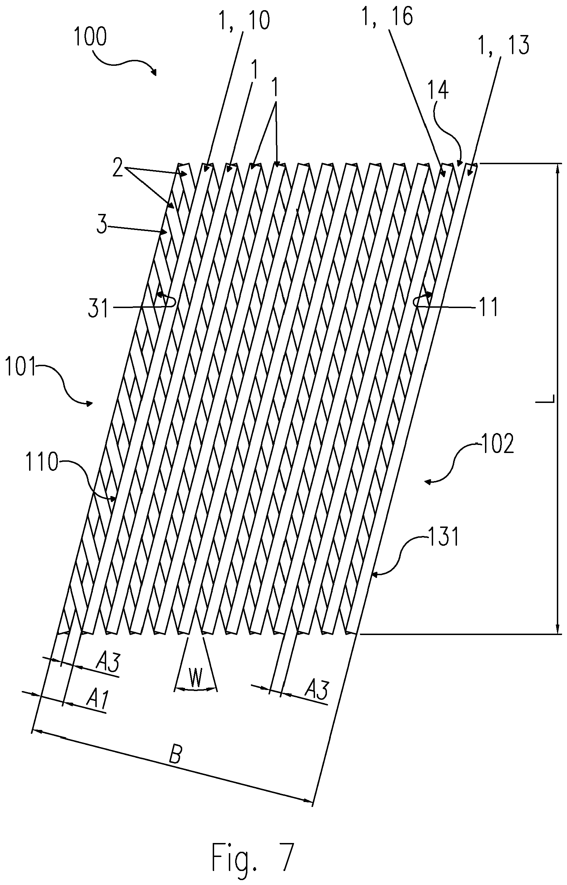

In den in Figuren 1 und 4 gezeigten Ausführungen endet die erste Lage aus Innenlamellen 1 mit einer letzten Innenlamelle 1 an dem zweiten Ende 102 der Matte 100 in einem zweiten Abstand A2, gemessen von der Außenseite 131 der letzten Innenlamelle 1, 13 zum zweiten Ende 102. In einer alternativen, in Figur 7 und einer nicht in den Figuren gezeigten Ausführung endet die erste Lage aus Innenlamellen 1 mit der Außenseite 131 einer letzten Innenlamelle 1 an dem zweiten Ende 102 der Matte 100 bündig damit.

In beiden Ausführungen dient die letzte Innenlamelle 1 als erste horizontale Verriegelungslamelle 13.

Außerdem ist eine dritte Lage vorgesehen. Diese Lage weist eine zweite horizontale Verriegelungslamelle 3 auf, die an dem ersten Ende 101 der Matte 100 und an einer der ersten Lage aus Innenlamellen 1 gegenüberliegenden Seite der zweiten Lage aus Außenlamellen 2 angeordnet und mit der zweiten Lage aus Außenlamellen 2 verbunden ist. Sie endet zum ersten Ende 101 der Matte 100 hin bündig und bildet damit die äußere Kante des ersten Endbereichs 101.

In allen Ausführungen dient die innere Kante 31 der zweiten horizontalen Verriegelungslamelle 3 zusammen mit der inneren Kante 11 der ersten horizontalen Verriegelungslamelle 13 als horizontale Verriegelung, wenn die zweite horizontale Verriegelungslamelle 3 in die zwischen erster horizontalen Verriegelungslamelle 13 und vorletzter Lamelle 15, 16 der Matte 100 gebildete Verriegelungsnut 14 in Eingriff gebracht ist, um die Wuchshilfe und/oder Schutzhülle zu bilden.

Je nach Ausführung kann die aus der Matte 100 gebildete Wuchshilfe und/oder Schutzhülle selbsthemmend verriegelt sein, also keine zusätzlichen Verschlusselemente 4-7 benötigen, oder es sind zusätzliche Verschlusselemente vorgesehen, um die Matte 100 in der gewünschten Form zu halten.

Die Form der Wuchshilfe und/oder Schutzhülle kann je nach Ausführung unterschiedlich gewählt werden, wie nachfolgend in Zusammenhang mit Figuren beschrieben.

Das Material der Wuchshilfe und/oder Schutzhülle ist so zu wählen, dass es eine gewisse Flexibilität aufweist. Es kann also sowohl Kunststoff als auch ein anderes Material gewählt werden. Um der Anforderung zu genügen, an der Pflanze ohne weitere Hilfsmittel und ohne weiteres Zutun zu verrotten, sind die Matte 100 und auch zusätzliche Verschlusselemente 4-7 aus einem oder mehreren auf Holzzellulose basierendem Werkstoffen gebildet. Solche Werkstoffe sind z.B. Holz, Holzfurnier, verholzte Pflanzen, Schälfurniere. Wichtig ist, dass das Material ein verrottbares Material ist, d.h. ein Material, das sich direkt vor Ort zersetzt, also ohne weitere Zusätze oder Kompostierhilfen. Durch die Verwendung von auf Holzzellulose basierenden Werkstoffen ist keine manuelle Entsorgung mehr nötig, was sowohl Zeit als auch Kosten spart. Außerdem ist ein geringer bis kein Pflegeaufwand nötig. Dennoch hat das Material eine hohe Widerstandsfähigkeit und Nutzungsdauer. Der Zerfallszeitraum beträgt 4 bis 7 Jahre.

Durch die Möglichkeit der Verwendung von nachwachsendem Rohstoff wird auch die Umwelt geschont. Auch sind auf Holzzellulose basierende Werkstoffe noch umweltverträglicher als kompostierbare Kunststoffe.

Die Matte 100 weist vorteilhaft dieselbe Länge L wie Breite B auf. Die Länge L ist dabei der horizontale bzw. waagerechte Abstand zwischen den äußeren Kanten letzten Innenlamelle 1, also z.B. der ersten Verriegelungslamelle 13 oder Haltelamelle 10. Da die Innenlamellen 1 und die zweite horizontale Verriegelungslamelle 3 parallel zueinander angeordnet sind und die Matte 100 über ihre gesamte Breite B dieselbe Länge L aufweist, sind die Innenlamellen 1 und die zweite horizontale Verriegelungslamelle 3 ebenfalls gleich lang.

Die Länge L der Matte 100 wird so gewählt, dass sie für alle Arten von Pflanzen verwendet werden kann, wenn sie in die Form einer Wuchshilfe und/oder Schutzhülle gebracht wurde. Vorteilhaft hat sie dann einen Durchmesser von 15cm bis 25cm und eine Höhe von 80cm bis 180cm.

Die Lamellenlagen 1, 2 und 3 sind vorteilhaft durch Kleben aneinander befestigt bzw. miteinander verbunden. Der hierfür verwendete Klebstoff ist dabei vorteilhaft biologisch ohne weitere Hilfsmittel abbaubar.

Ferner ist in allen Ausführungen der dritte Abstand A3 größer als eine Lamellenbreite B1. Auch ist in allen Ausführungen der erste Abstand A1 gleich oder größer dem zweiten Abstand A2.

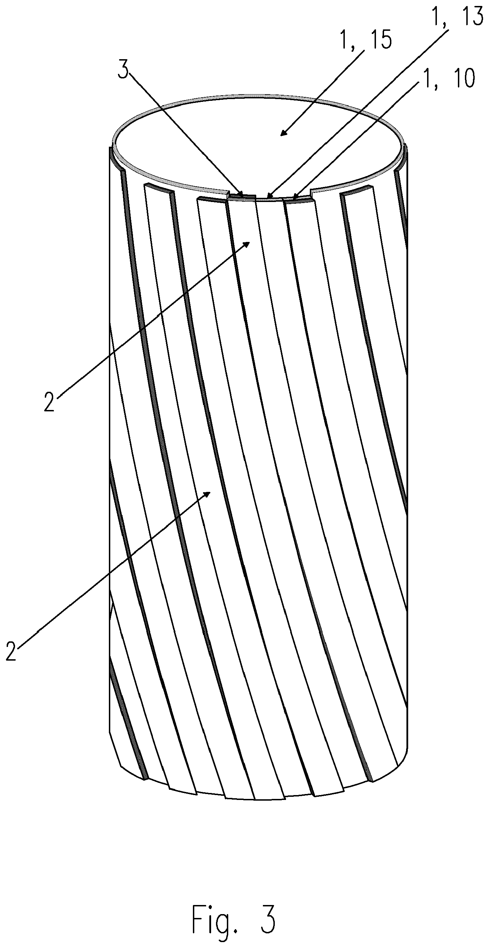

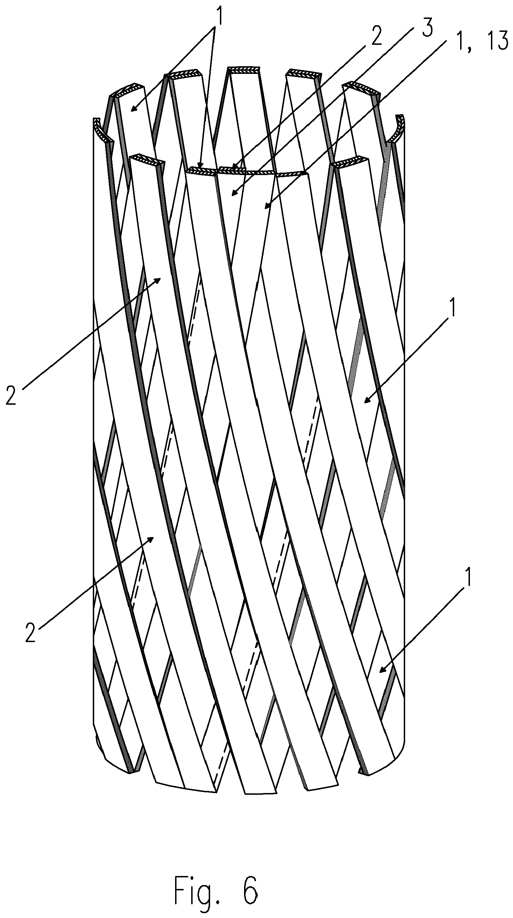

In Figuren 3, 5, 6, 8 und 9 bis 15 ist eine aus der in Figuren 1, 2, 4 und 7 gezeigten Matte 100 gebildete Wuchshilfe und/oder Schutzhülle gezeigt. Hierfür wird die Matte 100 derart gebogen, dass die erste Lage der Innenlamellen 1 nach innerhalb der fertigen Wuchshilfe und/oder Schutzhülle weist und die erste horizontale Verriegelungslamelle 13 in Eingriff mit der zweiten Verrieglungslamelle 3 und der Haltelamelle 10 gebracht wird. Hier dienen die Kanten 11 und 31 als Verriegelungskanten.

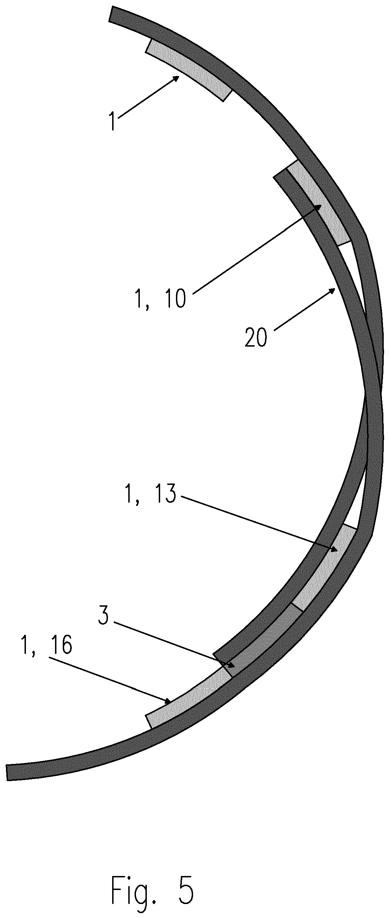

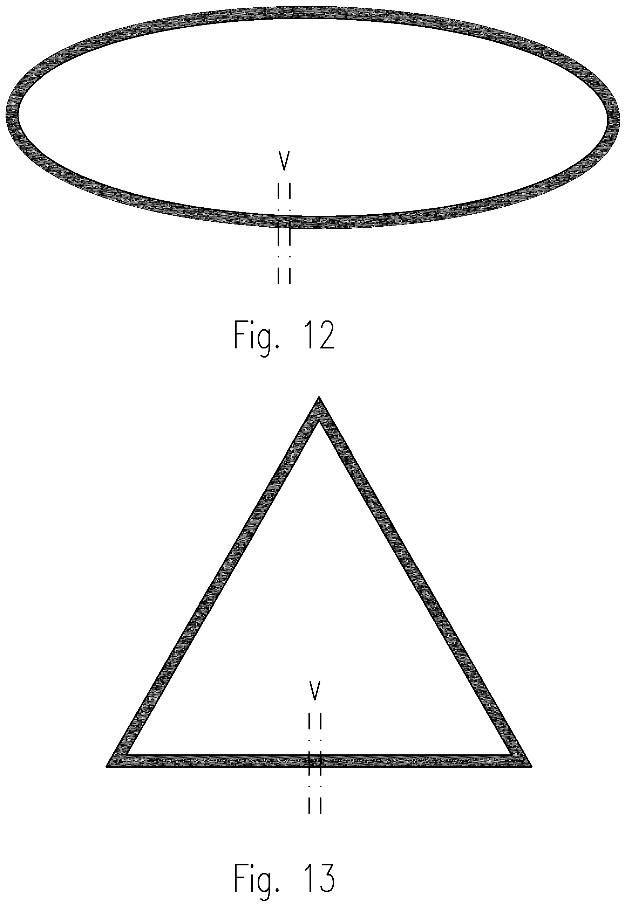

Grundsätzlich sind zwei unterschiedliche Ausführungen möglich: eine erste Ausführung, die eine selbsthemmende Verriegelung darstellt, in Figur 3, 5 (als Draufsicht) und 6 gezeigt, und eine zweite Ausführung, die eine nicht selbsthemmende Verriegelung darstellt, bei welcher Hilfsmittel verwendet werden, um die Matte 100 in der gewünschten Form zu halten, wie in Figuren 7-11 gezeigt. In den Figuren 12 bis 15 ist die Verriegelung mit dem Bezugszeichen V bezeichnet und an einer beispielhaften Stelle der Wuchshilfe und/oder Schutzhülle dargestellt. Die in den Figuren 12 bis 15 dargestellten Formen können sowohl als selbsthemmende Verriegelung als auch als Verriegelung mit Hilfsmitteln, also Verschlusselementen 4-7, ausgeführt sein.

In einer ersten Ausführung ist die Matte 100 wie in Figuren 1, 2 und 4 gezeigt, derart gebildet, dass die erste Lage aus Innenlamellen 1 an einem dem zweiten Ende 102 der Matte 100 in einem zweiten Abstand A2 zum zweiten Ende 102 beginnt, d.h. dass Endbereiche der Außenlamellen 2 der zweiten Lage aus Außenlamellen 2 an dem zweiten Ende 102 der Matte 100 über die erste Verriegelungslamelle 13 in dem zweiten Abstand A2 ab der äußersten Kante 131 davon herausstehen und damit als Haltefedern dienen. In dieser ersten Ausführung werden die zweite Verriegelungslamelle 3 in die Verriegelungsnut 14 zwischen vorletzter Innenlamelle 16 bzw. zweitem Endbereich E2 der Platte 15 und letzte Innenlamelle bzw. erster Verriegelungslamelle 13 gebracht, wie in der Draufsicht in Figur 5 gezeigt. Gleichzeitig werden die herausstehenden Außenlamellen 2 hinter die Haltelamelle 10 gesteckt bzw. geführt. Somit entsteht eine selbsthemmende Verriegelung und es sind keine weiteren Hilfsmittel nötig, damit die Wuchshilfe und/oder Schutzhülle in ihrer Form bleibt. Die Kanten 11 und 31 der ersten und zweiten Verriegelungslamelle 3, 13 dienen dabei als horizontale Verriegelung.

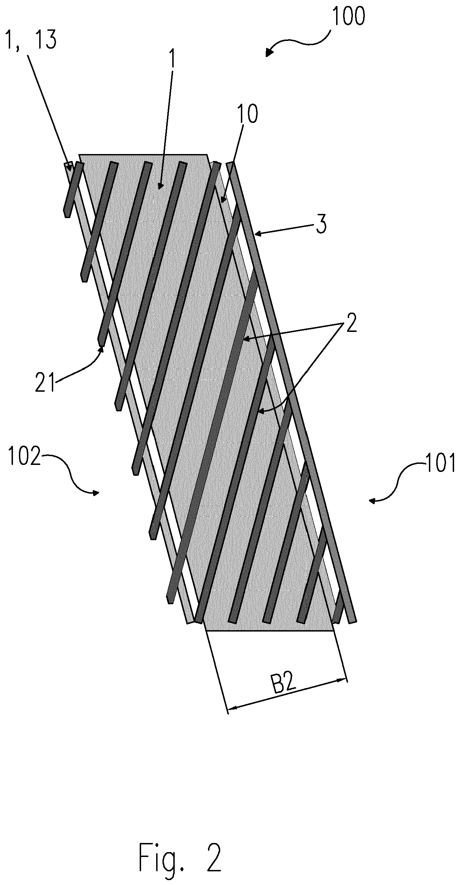

Der Hauptunterschied zwischen den in Figuren 1 (Innenansicht) bzw. 2 (Außenansicht) und Figur 4 gezeigten Ausführungen der Matte 100 ist, dass in Figuren 1 bzw. 2 die erste Lage aus Innenlamellen 1 aus der Haltelamelle 10 und der ersten horizontalen Verriegelungslamelle 13 sowie einer dazwischen angeordneten durchgängigen Platte 15 gebildet ist, während die Innenlamellen 1 der in Figur 4 gezeigten Ausführung alle dieselbe Lamellenbreite B1 aufweisen. Das heißt, dass die in Figuren 1 bzw. 2 gezeigte Ausführung eine Platte 15, sowie die Haltelamelle 10 und die erste horizontale Verriegelungslamelle 13 als Lage an Innenlamellen 1 aufweist, während die in Figur 4 gezeigte Ausführung in einem Abstand A3 zueinander angeordnete Innenlamellen 1 zeigt. Die in Figur 1 bzw. 2 gezeigten einzelnen Innenlamellen 1, bis auf die jeweils äußersten Innenlamellen 1, also die Haltelamelle 10 und die der ersten horizontalen Verriegelungslamelle 13, sind also einstückig in einer Plattenbreite B2 ausgeführt. Dabei ist ferner die Haltelamelle 10 direkt, also ohne Abstand, an einem ersten Endbereich E1 der Platte 15, der in Richtung erstes Ende 101 der Matte 100 weist, befestigt. Die erste horizontale Verriegelungslamelle 13 ist an einem zweiten Endbereich E2 der Platte 15, der in Richtung zweites Ende 102 der Matte 100 weist, im Abstand A3 befestigt (ab der Kante 11 gemessen). Ein Vorteil der Ausführung mit einer durchgängigen Platte 15 als Großteil der ersten Lage aus Innenlamellen 1 ist, dass hier die Montage noch einfacher als bei allen anderen Ausführungen ist, weil man die über die erste Verriegelungslamelle 13 herausstehenden Enden der Außenlamellen 2 parallel unter die Haltelamelle 10 einschieben kann. Da in beiden Ausführungen Haltelamelle 10 und erste horizontale Verriegelungslamelle 13 vorhanden sind, ist die Breite der Platte 15 bzw. die Anzahl der Innenlamellen 1 so zu wählen, dass die gewünschte Breite B der Matte 100 resultiert.

Ein weiterer Unterschied ist, dass in der in Figur 4 gezeigten Ausführung die Haltelamelle 10 in einem vierten Abstand A4 ausgehend von der Innenkante 31 der ersten horizontalen Verriegelungslamelle 3 angeordnet ist, der gleich oder kleiner dem zweiten Abstand A2 ist, oder gleich dem zweifachen dritten Abstand A3 plus einer Lamellenbreite B1. Der vierte Abstand A4 ist stets größer als eine Lamellenbreite B1. Ferner entspricht in der in Figur 4 gezeigten Ausführung der erste Abstand A1 der Summe aus dem vierten Abstand und einer Lamellenbreite B1, während in der in Figur 1 bzw. 2 gezeigten Ausführung der erste Abstand A1 der Summe aus einem dritten Abstand A3 und einer Lamellenbreite B1 entspricht.

Die Haltelamelle 10 und die erste und die zweite horizontale Verriegelungslamelle 13, 3 weisen vorteilhaft dieselbe Lamellenbreite B1 auf, während die Platte 15 eine Plattenbreite B2 aufweist, die deutlich breiter ist als die Lamellenbreite B1. Die Plattenbreite B2 ist durch die gewünschte Breite B der Matte 100 und die Haltelamelle 10 und erste horizontale Verriegelungslamelle 13, sowie Abstände A2 und A3 vorgegeben. Vorteilhaft sind die zweite horizontale Verriegelungslamelle 3 und die Haltelamelle 10 im dritten Abstand A3 zueinander angeordnet.

In den in Figuren 1 bis 6 gezeigten Ausführungen ist der Endbereich der herausstehenden Außenlamellen 2 vorteilhaft mit einer Schutzfase 21 versehen. Somit können Verletzungen bei der Montage durch scharfkantige Endbereiche vermieden werden und das Einführen der Haltefedern wird erleichtert.

In den in Figuren 7 bis 11 gezeigten alternativen Ausführungen ist die in Figur 7 gezeigte Matte 100 im Prinzip gleich wie in der ersten Ausführung gebildet, mit der Ausnahme, dass die erste Lage aus Innenlamellen 1 an einem dem zweiten Ende 102 der Matte 100 bündig endet. In den Figuren ist lediglich die Ausführung gezeigt, bei der die Innenlamellen 1 in gleicher Lamellenbreite B1 gebildet sind. Die Ausführung, in der die mittlere Innenlamelle 1 als Platte 15 gebildet ist, ist zwar nicht gezeigt, folgt aber nach demselben Prinzip. Auch in diesen Ausführungen wird die Matte 100 wie beschrieben gebogen, um eine Wuchshilfe und/oder Schutzhülle zu erhalten. Allerdings wird hier lediglich die zweite Verriegelungslamelle 3 in die Verriegelungsnut 14 eingebracht, so dass die Kanten 11 und 31 als horizontale Verriegelung dienen. Da in dieser Ausführung keine hinter die Haltelamelle 10 eingeführten Teile der Außenlamellen 2 vorhanden sind, ist ein Hilfsmittel nötig, damit die Wuchshilfe und/oder Schutzhülle in ihrer Form bleibt. Als Hilfsmittel können unterschiedliche Verschlusselemente 4 bis 7 vorgesehen sein. Zweck dieser Verschlusselemente 4-7 ist es, die gebogene Matte 100 in einfacher Weise in der gewünschten Form zu halten.

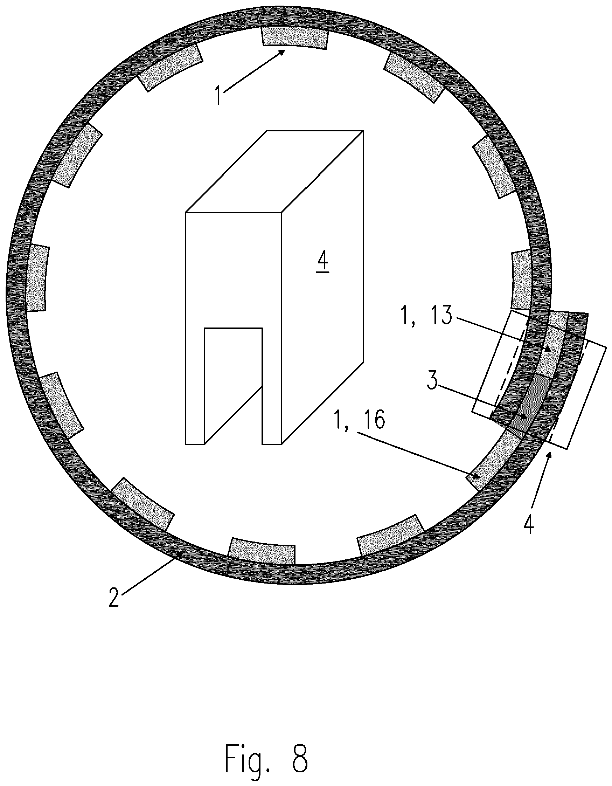

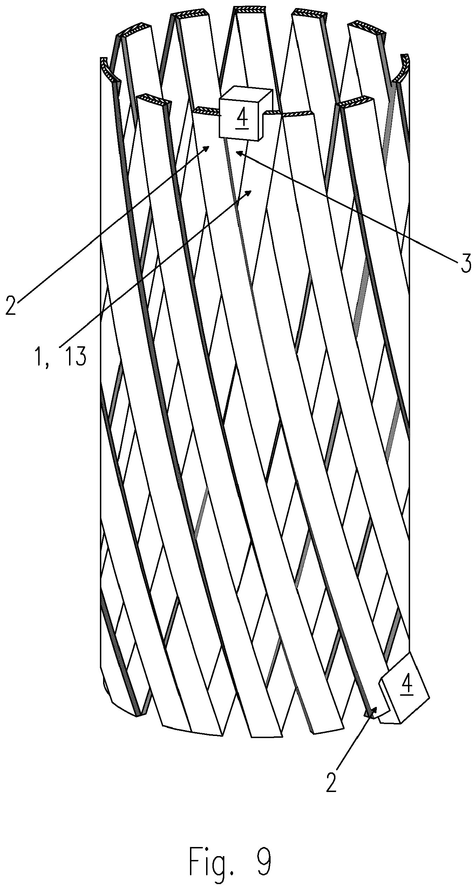

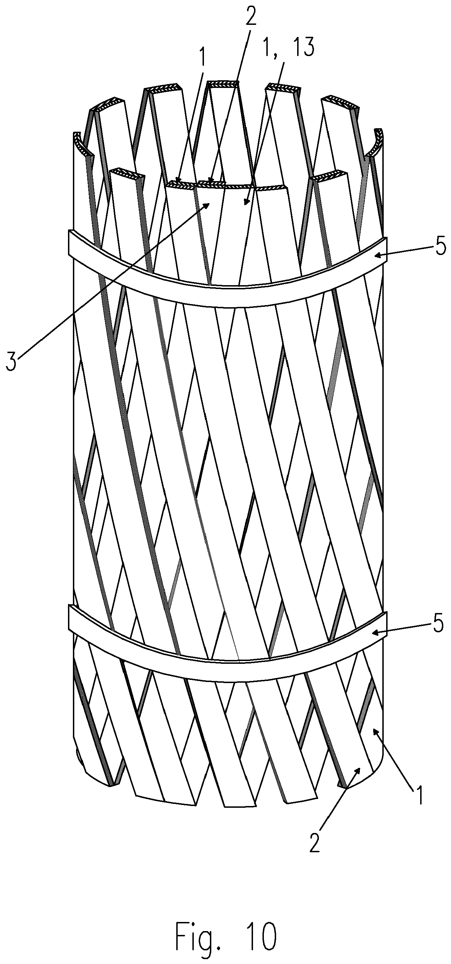

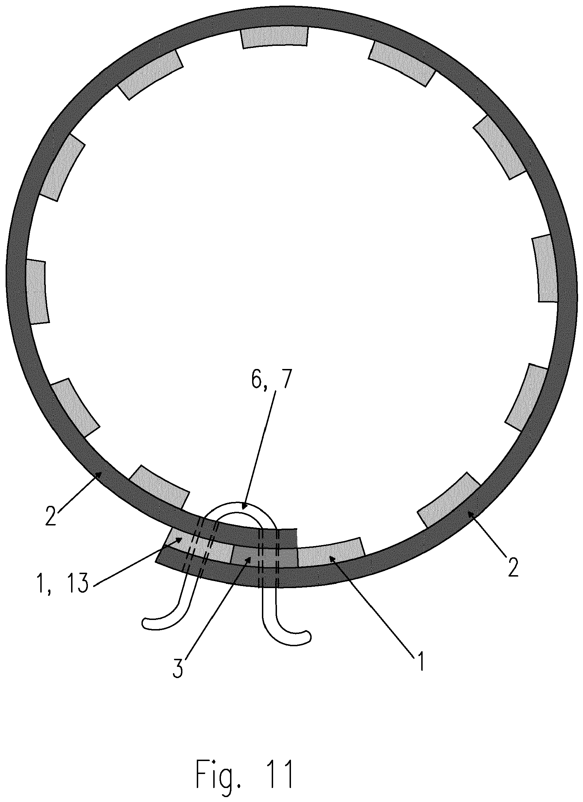

Als Verschlusselement kann mindestens eine Halteklemme 4 dienen, wie in Figuren 8 und 9 gezeigt. Diese wird so auf die gebogene Matte 100 aufgesteckt, dass sie die zweite Verriegelungslamelle 3 und/oder die Haltelamelle 10 mit der ersten Verriegelungslamelle 13 verbindet. Ferner kann mindestens ein umlaufendes Band 5 vorgesehen sein, wie in Figur 10 gezeigt. Auch kann, wie in Figur 11 gezeigt, mindestens ein durch die erste Verriegelungslamelle 13 und die zweite Verriegelungslamelle 3 sowie den zugehörigen Bereich der Lage der Außenlamellen 2 durchgeführtes Befestigungselement 6, 7 vorgesehen sein. Das Befestigungselement 6, 7 kann zusätzlich mit einem Draht oder Strick, z.B. einem Jute-Strick, vor einem Herausfallen gesichert sein.

Sowohl durch die selbsthemmende Ausführung als auch, wenn Verschlusselemente 4-7 benötigt werden, ist eine ist eine einfache Montage ohne Werkzeug möglich.

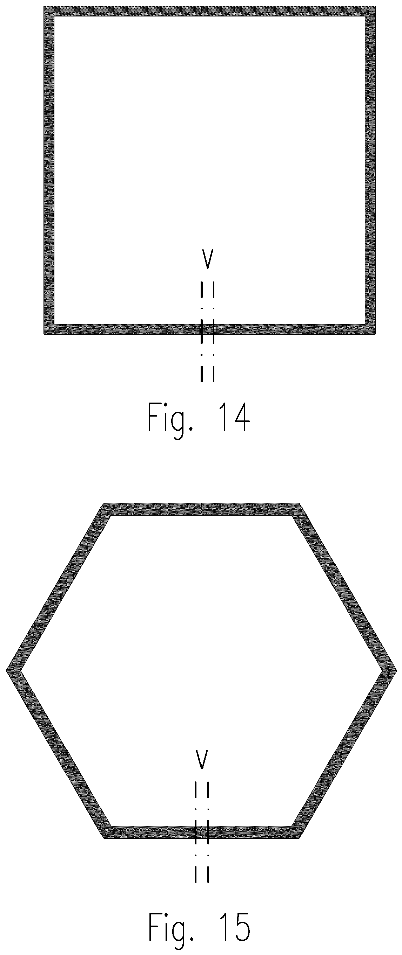

In Figuren 12 bis 15 sind mögliche Formen gezeigt, in welche die Matte 100 gebracht werden kann. In Figur 12 ist die Matte 100 oval gebogen. In Figur 13 ist sie als Dreieck ausgeführt, Dies kann durch Biegen oder durch Verbinden dreier Matten 100 miteinander erreicht werden. In Figur 14 ist sie als Quadrat ausgeführt und in Figur 15 als Mehreck, speziell als Sechseck. Dies kann durch Biegen oder durch Verbinden dreier Matten 100 miteinander erreicht werden. Vorteilhaft sind insbesondere bei Ausführungen mit wenig bis keinen Rundungen Hilfsmittel wie oben beschriebene Verschlusselemente 4-7 vorgesehen, um die Matte 100 in der gewünschten Form zu halten. Das Biegen kann insbesondere bei auf Holzzellulose basierendem Werkstoffen durch Erwärmen z.B. mit Wasserdampf erfolgen.

### Bezugszeichenliste

- 1: Erste Lage, Innenlamelle
- 10: Haltelamelle
- 11: Zweite Verriegelungskante horizontal
- 12: Verriegelungskante vertikal
- 13: Erste Verriegelungslamelle im Inneren
- 14: Verriegelungsnut
- 15: Platte zwischen 10 und 13
- 16: Vorletzte Innenlamelle
- 131: Außenseite Verriegelungslamelle 13
- 110: Außenseite Haltelamelle 10
- 2: Zweite Lage, Außenlamelle
- 20: Endbereiche der Außenlamellen 2, Haltefedern
- 21: Schutzfase, bzw. Einführfase
- 3: Dritte Lage, Zweite Verriegelungslamelle horizontal
- 31: Erste Verriegelungskante horizontal
- 4: Verschlusselement als Halteklemmen / Hilfsmittel
- 5: Verschlusselement als umlaufendes Band / Hilfsmittel
- 6: Verschlusselement als Jute Strick / Hilfsmittel
- 7: Verschlusselement als Draht / Hilfsmittel
- 100: Matte
- 101: erstes Ende der Matte
- 102: zweites Ende der Matte
- A1: Erster Abstand
- A2: Zweiter Abstand von 131 bis 102
- A3: Dritter Abstand
- A4: Vierter Abstand von 31 bis 110
- W: Winkel zwischen Außenlamellen und Innenlamellen
- V: Selbsthemmende Verriegelung oder Verriegelung mit Hilfsmittel
- E1: erster Endbereich der Platte
- E2: zweiter Endbereich der Platte
- L: Länge der Matte
- B: Breite der Matte
- B1: Lamellenbreite
- B2: Plattenbreite

## Patentansprüche

1. Matte (100), gebildet aus
a. Einer ersten Lage aus Innenlamellen (1), die gebildet ist aus mehreren, jeweils parallel und in einem Abstand zueinander angeordneten Innenlamellen (1),
b. Einer zweiten Lage aus Außenlamellen (2), die gebildet ist aus mehreren, jeweils parallel und in einem Abstand zueinander angeordneten Außenlamellen (2), wobei die zweite Lage aus Außenlamellen (2) die Breite (B) der Matte (100) von einem ersten Ende (101) zu einem zweiten Ende (102) der Matte (100) definiert, und wobei
i. die erste Lage aus Innenlamellen (1) und die zweite Lage aus Außenlamellen (2) miteinander derart verbunden sind, dass die Innenlamellen (1) und die Außenlamellen (2) in einem Winkel (W) zueinander angeordnet sind, und
ii. Die erste Lage aus Innenlamellen (1) in einem ersten Abstand (A1) von dem ersten Ende (101) der Matte (100) beginnt, wobei die erste Innenlamelle (1) als Haltelamelle (10) dient, und
iii. Die erste Lage aus Innenlamellen (1) an dem zweiten Ende (102) der Matte (100) in einem zweiten Abstand (A2) zum zweiten Ende (102) endet oder bündig damit endet, wobei die letzte Innenlamelle (1) als erste horizontale Verriegelungslamelle (13) dient, und
c. Wobei an dem ersten Ende (101) der Matte (100) eine zweite horizontale Verriegelungslamelle (3) an einer der ersten Lage aus Innenlamellen (1) gegenüberliegenden Seite der zweiten Lage aus Außenlamellen (2) derart angeordnet und mit der zweiten Lage aus Außenlamellen (2) verbunden ist, dass sie zum ersten Ende (101) der Matte (100) bündig beginnt.

2. Matte (100) nach Anspruch 1, wobei
a. die erste horizontale Verriegelungslamelle (13) im zweiten Abstand (A2) zum zweiten Ende (102) der Matte (100) endet, und
b. die Innenlamellen (1), die Außenlamellen (2) und die zweite horizontale Verriegelungslamelle (3) dieselbe Lamellenbreite (B1) aufweisen, und
c. die Innenlamellen (1) in einem dritten Abstand (A3) zueinander angeordnet sind, und
d. die Außenlamellen (2) im dritten Abstand (A3) zueinander angeordnet sind, und
e. die Haltelamelle (10) einen vierten Abstand (A4) zu einer von dem ersten Ende (101) weg weisenden Innenkante (31) der zweiten horizontalen Verriegelungslamelle (3) aufweist, und
f. der erste Abstand (A1) dem vierten Abstand (A4) plus der Lamellenbreite (B1) entspricht, also A1 = A4 + B1, wobei A4 mindestens größer als die Lamellenbreite (B1) ist.

3. Matte (100) nach Anspruch 2, wobei der vierte Abstand (A4)
a. gleich oder kleiner dem zweiten Abstand (A2) ist, oder
b. gleich dem zweifachen dritten Abstand (A3) plus einer Lamellenbreite (B1).

4. Matte (100) nach Anspruch 1, wobei
a. die erste Lage aus Innenlamellen (1) aus der Haltelamelle (10) und der ersten horizontalen Verriegelungslamelle (13) sowie einer dazwischen angeordneten durchgängigen Platte (15) mit einer Plattenbreite (B2) gebildet ist, und
b. die Haltelamelle (10) direkt an einem ersten Endbereich (E1) der Platte (15) befestigt ist, der zum ersten Ende (101) der Matte (100) weist, und
c. die erste horizontale Verriegelungslamelle (13)
i. in einem dritten Abstand (A3) zu einem zweiten Endbereich (E2) der Platte (15) befestigt ist, und
ii. in einem zweiten Abstand (A2) zum zweiten Ende (102) endet, und wobei
d. die Haltelamelle (10) und die zweite horizontale Verriegelungslamelle (3) im dritten Abstand (A3) zueinander angeordnet sind.

5. Matte (100) nach einem der Ansprüche 2 bis 4, wobei Endbereiche der zum zweiten Ende (102) der Matte (2) weisenden Außenlamellen (2) mit einer Schutzfase (21) versehen sind.

6. Matte nach einem der Ansprüche 1 bis 5, wobei der erste Abstand (A1) gleich oder größer dem zweiten Abstand (A2) ist: A1 ≥ A2, und/oder der dritte Abstand (A3) größer als die Lamellenbreite (B1) ist: A3 > B1.

7. Matte (100) nach Anspruch 1, wobei
a. die erste horizontale Verriegelungslamelle (13) bündig mit dem zweiten Ende (102) der Matte (100) endet, und
b. die Innenlamellen (1), die Außenlamellen (2) und die zweite horizontale Verriegelungslamelle (3) dieselbe Lamellenbreite (B1) aufweisen, und
c. die Innenlamellen (1) in einem dritten Abstand (A3) zueinander angeordnet sind, und
d. die Außenlamellen (2) im dritten Abstand (A3) zueinander angeordnet sind, und
e. die Haltelamelle (10) im dritten Abstand (A3) zu einer von dem ersten Ende (101) weg weisenden Innenkante (31) der zweiten horizontalen Verriegelungslamelle (3) angeordnet ist, der kleiner als der erste Abstand (A1) ist, und wobei der dritte Abstand (A3) größer als die Lamellenbreite (B1) ist: A3 > B1.

8. Matte (100) nach Anspruch 1, wobei
a. die erste Lage aus Innenlamellen (1) aus der Haltelamelle (10) und der ersten horizontalen Verriegelungslamelle (13) sowie einer dazwischen angeordneten durchgängigen Platte (15) mit einer Plattenbreite (B2) gebildet ist, und
b. die Haltelamelle (10) direkt an einem ersten Endbereich (E1) der Platte (15) befestigt ist, der zum ersten Ende (101) der Matte (100) weist, und
c. die erste horizontale Verriegelungslamelle (13)
i. in einem dritten Abstand (A3) zu einem zweiten Endbereich (E2) der Platte (15) befestigt ist, und
ii. bündig mit zweiten Ende (102) endet, und wobei
d. die Haltelamelle (10) und die zweite horizontale Verriegelungslamelle (3) im dritten Abstand (A3) zueinander angeordnet sind.

9. Matte (100) nach einem der vorhergehenden Ansprüche, wobei die Haltelamelle (10) und die erste horizontale Verriegelungslamelle (13) dieselbe Lamellenlänge wie die zweite horizontale Verriegelungslamelle (3) aufweisen.

10. Matte nach einem der vorhergehenden Ansprüche, die aus einem oder mehreren auf Holzzellulose basierendem Werkstoffen gebildet ist.

11. Matte nach einem der vorhergehenden Ansprüche, wobei
a. der Winkel (W) zwischen einschließlich 0 Grad und einschließlich 90 Grad ist, und bevorzugt 30 Grad ist, und/oder
b. wobei die Länge (L) der Matte (100) der Breite (B) der Matte (100) entspricht.

12. Wuchshilfe und/oder Schutz für Pflanzen, gebildet aus einer Matte (100) nach einem der vorhergehenden Ansprüche, wobei im Falle, dass die Lage aus Innenlamellen (1) im zweiten Abstand (A2) vom zweiten Ende (102) der Matte (100) endet, das erste Ende (101) und das zweite Ende (102) der Matte (100) vertikal und horizontal selbsthemmend derart miteinander in Eingriff gebracht sind, dass
i. Die zweite Verriegelungslamelle (3) in die durch die vorletzte Innenlamelle (15, 16) auf Seite des zweiten Endes (102) der Matte (100) und die erste Verriegelungslamelle (13) gebildete Verriegelungsnut (14) eingebracht ist, und
ii. die Endbereiche (20) der Außenlamellen (2) in den Bereich (A1, A4) zwischen Haltelamelle (10) und erster horizontaler Verriegelungslamelle (13) hinter die Haltelamelle (10) geführt sind.

13. Wuchshilfe und/oder Schutzhülle für Pflanzen, gebildet aus einer Matte (100) nach einem der vorhergehenden Ansprüche, wobei im Falle, dass die Lage aus Innenlamellen (1) bündig mit dem zweiten Ende (102) der Matte (100) endet,
a. mindestens ein Verschlusselement (4-7) vorgesehen ist, und wobei
b. das erste Ende (101) und das zweite Ende (102) der Matte (100) derart miteinander in Eingriff gebracht sind, dass die zweite Verriegelungslamelle (3) in die durch die vorletzte Innenlamelle (15, 16) auf Seite des zweiten Endes (102) der Matte (100) und die erste Verriegelungslamelle (13) gebildete Verriegelungsnut (14) eingebracht ist, und
c. das erste Ende (101) und das zweite Ende (102) der Matte (100) mittels mindestens einem der Verschlusselemente (4-7) miteinander verbunden sind.

14. Wuchshilfe und/oder Schutzhülle nach Anspruch 13, wobei das Verschlusselement (4-7) eines oder eine Kombination ist aus:
a. Mindestens einer Halteklemme (4), welche die zweite Verriegelungslamelle (3) und/oder die Haltelamelle (10) mit der ersten Verriegelungslamelle (13) verbindet,
b. Mindestens einem um die Wuchs- und/oder Schutzhülle umlaufenden Band (5),
c. Mindestens einem durch erste Verriegelungslamelle (13) und zweite Verriegelungslamelle (3) sowie den zugehörigen Bereich der Lage der Außenlamellen (2) durchgeführten Befestigungselement (6, 7),
d. Mindestens einem durch erste Verriegelungslamelle (13) und zweite Verriegelungslamelle (3) sowie den zugehörigen Bereich der Lage der Außenlamellen (2) durchgeführten Befestigungselement (6, 7), welche mittels einem Strick oder Draht miteinander verbunden sind.
